# EUROPEAN PATENT SPECIFICATION

(11) **EP 1 227 966 B1**
(45) Date of publication and mention of the grant of the patent: **09.03.2005**
(21) Application number: 01955282.7
(22) Date of filing: 16.05.2001
(51) Int. Cl.: B62D 9/02

(54) **IMPROVEMENTS IN VEHICLES HAVING TWO FRONT ROLLING AND STEERING WHEELS AND AT LEAST A REAR DRIVING WHEEL**
VERBESSSERUNGEN AN FAHRZEUGEN MIT ZWEI LENKBAREN VORDERRÄDERN UND MINDESTENS EINEM ANTREIBENDEN HINTERRAD
AMELIORATIONS APPORTEES A DES VEHICULES DOTES DE DEUX ROUES DIRECTRICES ET ROULANTES AVANT ET D'AU MOINS UNE ROUE ARRIERE MOTRICE

(30) Priority: 02.06.2000 IT PN000034
(43) Date of publication of application: 07.08.2002
(73) Proprietor: APRILIA S.P.A., 30033 Noale (Venezia) (IT)
(72) Inventor: COCCO, Gaetano, I-36040 Torri di Quartesolo (IT); RAFFAELLI, Andrea, I-30033 Noale (IT); SCOMAZZON, Leandro, I-30034 Mira (IT)
(74) Representative: Giugni, Valter
(86) International application number: PCT/EP2001/005553
(87) International publication number: WO 2001/092084

(56) References cited:
- WO-A-99/47372
- AU-A- 1 467 183
- GB-A- 2 155 410
- GB-A- 2 279 047
- US-A- 4 375 293

## Description

The present invention refers to a vehicle driven by an internal-combustion and/or electric engine, comprising two front rolling and steering wheels and at least a rear driving wheel.

The state of art that can be considered as coming closest to the present invention is the international patent application WO-A-99 41 136. In the three-wheel vehicle described there, the linkage mechanism used to connect the front wheel with each other consists of two deformable trapeziums that, further to the rigid members supporting the spindles, is formed by two overlying pairs of cross arms provided with articulated central fulcra.

To one of such pairs of cross arms, and therefore without any connection to the chassis of the vehicle, there are attached the two end portions of a transversal shock-absorbing strut that comes into action when one of the two front wheels rises with respect to the other one.

On the contrary, when the driver forces the two front wheel to roll owing to a simple displacement of his body (as in a two-wheel motor-cycle), for instance when taking a bend, the shock-absorbing strut is not subject to compression or relieving. The two central fulcra are in fact displaced with respect to the median longitudinal plane of the vehicle, but in each trapezium the corresponding arms of the deformable trapeziums do not change their relative angle (on the contrary, they remain parallel to each other) and the centre of gravity of the vehicle lowers as a function of solely the rolling angle, just as this occurs in a two-wheel vehicle. The transversal stability of the vehicle is ensured by the fact that the steering axes, at the Hooke's joints connecting the spindles to the steering assembly, remain constantly perpendicular to the axes of rotation of the respective front wheel.

Owing to the absence of any connection between the shock-absorbing strut and the chassis, as well as the considerable inertia of the parts forming the linkage mechanism with respect to the axes of the central fulcra of the cross arms, this prior-art vehicle tends to be rather slow in responding to the commands of the driver, so that it is actually rather difficult to drive. This is practically prejudicial to the possibility of equipping of the vehicle, even and much more so on an optional basis, with a protective covering or a roll bar due to the difficulty found by the design engineer to anticipate or predict all possible trims of the vehicle when the front wheels thereof are rolling. Furthermore, the unavoidable presence of a bottom cross arm between the equatorial planes of the front wheels and the respective steering axes thereof may have adverse consequences in the case of a sharp braking, owing to the link rods of the steering assembly being strongly stressed thereby.

It therefore is a main purpose of the present invention to provide a vehicle with two front rolling and steering wheels, which, further to ensuring a greater extent of comfort as compared with a traditional motor-cycle, is free from the afore cited drawbacks and is therefore capable of being equipped , even on an optional basis, with various types of protective coverings or roll bars. A further purpose of the present invention is to provide, albeit within certain limits, a simple and low-cost construction of the vehicle as compared to the traditional construction of two-wheel vehicles.

According to the present invention, these and further aims are reached in a vehicle having the characteristics as recited in the appended claims, which uses a pair of shock-absorbing struts and an associated rocker-arm structure in the assembly through which the chassis supports the cross-bar linkage mechanism connecting the two front rolling and steering wheels with each other.

In this connection, the Applicant does not consider such prior publications as the US patent specifications US-A-4 003 443, 4 887 829, 5 611 555, as well as the patent applications WO-A-97 27 071, WO-A-98 43 872, as being of any relevance since, in vehicles having a single front steering wheel, they feature shock-absorbing struts associated to more or less horizontal fork members supporting two rear rolling, but not steering wheels.

Anyway, features and advantages of the present invention will be more readily understood from the description that is given below by way of non-limiting example with reference to the accompanying drawings, in which it should be noticed that, for reasons of greater simplicity, both the description and the drawings are substantially limited to those construction parts of the vehicle which are directly concerned by the present invention or are anyway useful in view of being able to explain the way in which it actually works. As a result, references to other component parts (such as for instance driving engine, tanks, radiator, electric components, steering assembly), which may be of a fully traditional type, are intentionally omitted.
- Figure 1 is a three-dimensional overall view of a first embodiment of a vehicle with two front rolling and steering wheels;
- Figure 2 is a view showing on a greater scale, and in a slightly different perspective, only a portion of the vehicle illustrated in Figure 1 in order to better highlight the details of the linkage mechanism connecting the two front wheels with each other;
- Figure 3 is a side view of the structure used to interconnect the chassis and said linkage mechanism illustrated in the above cited Figures;
- Figure 4 is a front view of the same linkage mechanism in the no-load, ie. resting trim of the vehicle (static trim);
- Figure 5 is a similar view as Figure 4, but referred to a first dynamic trim of the vehicle (ie. vehicle moving under load conditions along a rectilinear route);
- Figure 6 is a view referring to a second dynamic trim of the vehicle (ie. vehicle that, further to being under load conditions, is taking a bend);
- Figure 7 is a view illustrating a second embodiment of the present invention and referring to a vehicle trim corresponding to the one shown in Figure 5.

Part of the rigid chassis of the vehicle are a first pair 1 and a second pair 2 of longitudinal tubes, wherein the longitudinal tubes of said second pair are longer and arranged in a higher position than the ones of said first pair. The upper tubes 2 are joined to each other on the rear side by means of a first bracket 3 and, a little further on, they are welded on to the rear end portion of the lower tubes 1 near the suspension points of a pair of shack-absorbing struts 5 which, with a C-shaped fork member 6 hinged on to the lower tubes 1, are part of the suspension system of a rear driving wheel 4. A transversal tube 7 in the shape of a reversed U, arranged practically below a second bracket 8 connecting the upper tubes 8 to each other, forms another joining means between the two pairs of tubes of the chassis.

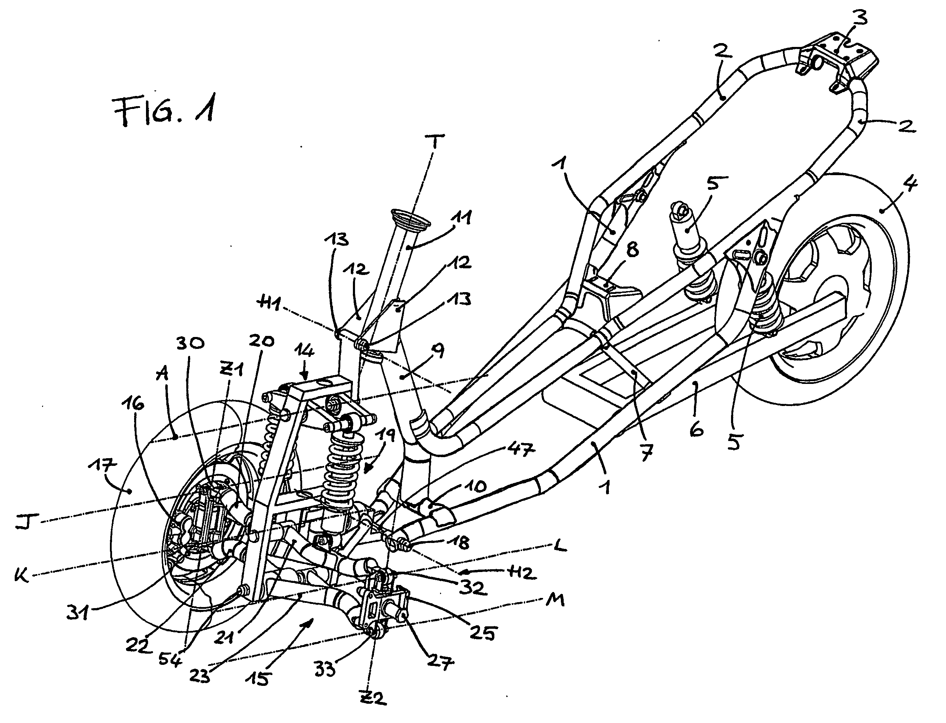

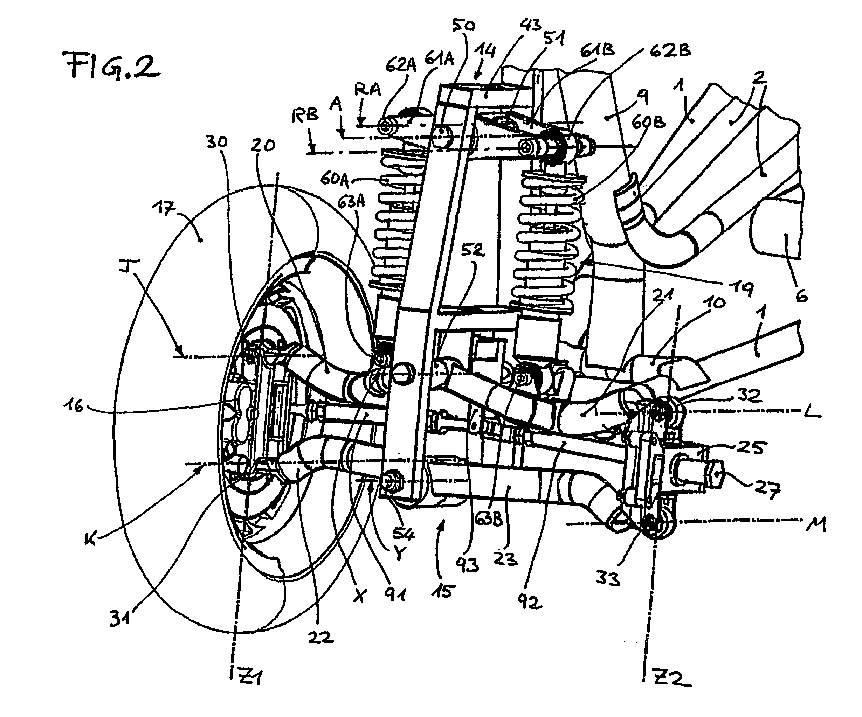

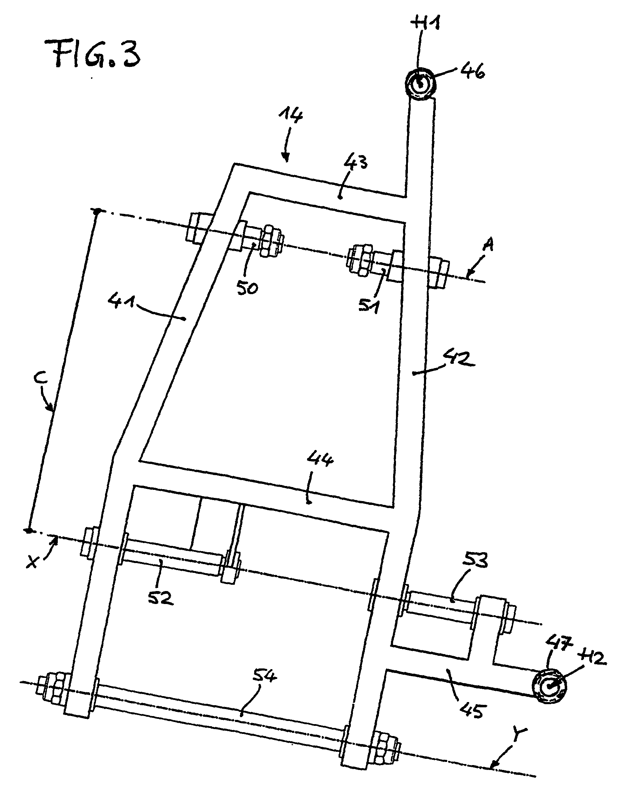

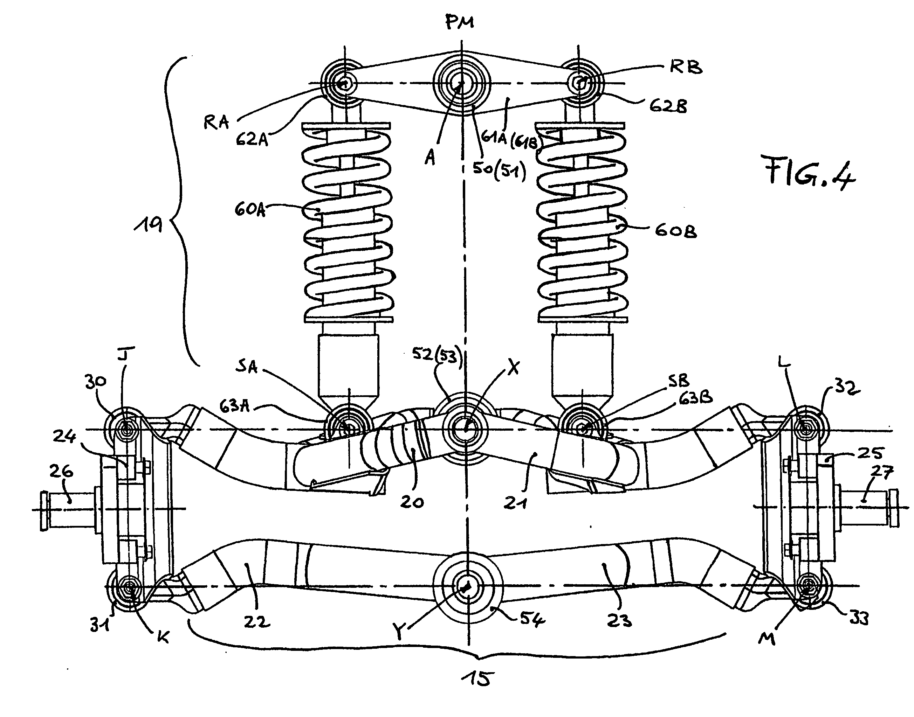

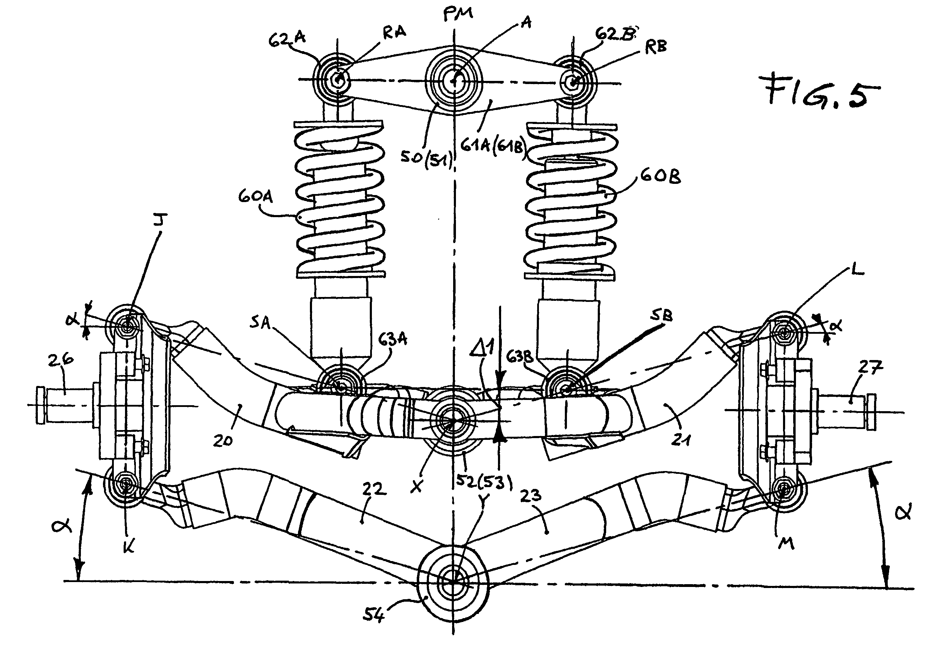

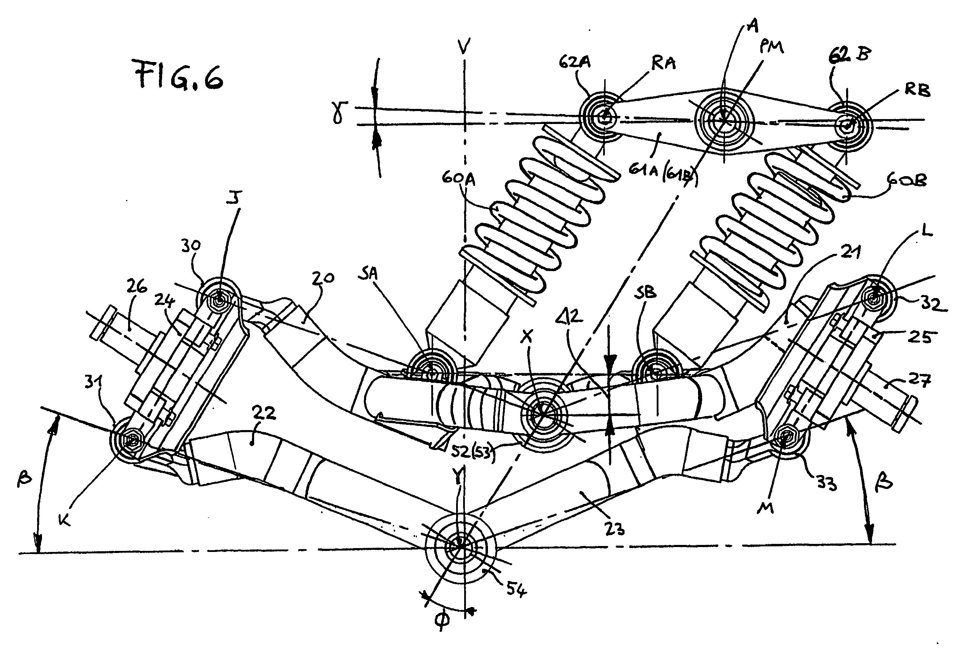

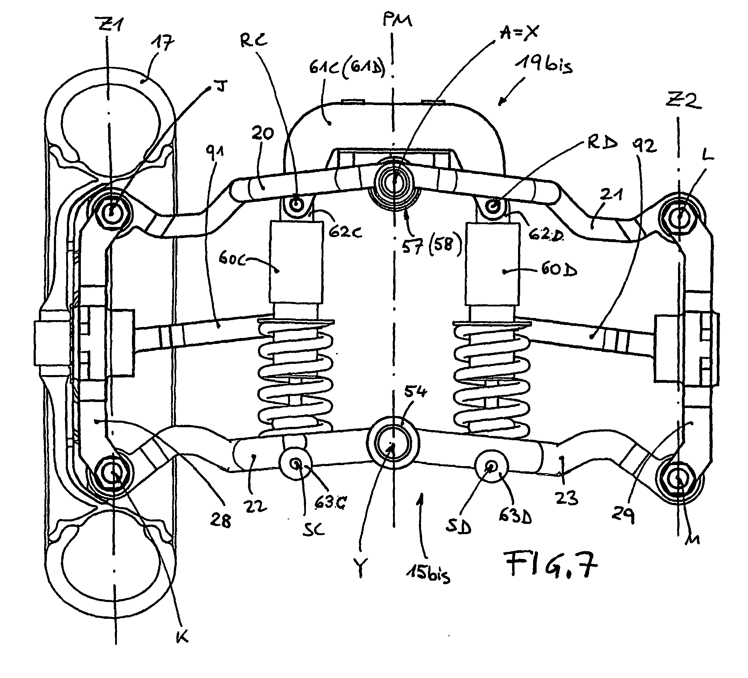

The main descending tube 9 of the chassis is welded at the bottom with its lower end portion to a cross member 10 that connects the lower tubes 1 to each other near the front end portion thereof , and on top to both the head 11 of the steering gear, so that the axis T of the latter is inclined by approx. 25° with respect to the vertical, and a pair of brackets 12 supporting as many bushes 13 - see Figure 1.

The vehicle comprises two front wheels, of which only the right-hand one 17 is shown in Figures 1 and 2, with the related brake shoe 16, for reasons of greater simplicity. The wheels are steering about respective steering axes Z1, Z2 that are inclined by approx. 15° with respect to the vertical, and are additionally rolling thanks to a linkage mechanism that is generally indicated at 15 and ensures the mutual connection thereof.

As illustrated in Figures 3 through to 6, said linkage mechanism 15 comprises:
- two pairs 20, 21 and 22, 23 of rigid transversal bars arranged above each other and provided with central fulcra according to axes X and Y that are parallel to each other and lie on the median plane PM of the vehicle. When seen from above, said bars appear to be in a bifurcate shape so as to be able to obtain the required rigidity to oppose shocks and stresses acting in a longitudinal direction of the vehicle, as they may for instance derive from a single wheel being braked or exposed to frontal shocks, as well as stresses that are directed vertically. The upper bars 20, 21 are also a part of a suspension system, which is generally indicated at 19 and is described in greater detail further on;
- rigid members 24, 25 that carry (by means of appropriate interfacing bearings) the spindles 26, 27 of the two wheels;
- two pairs of ball-and-socket joints 30, 31 and 32, 33 (that have the advantage of enabling the tolerances allowed for or introduced in processing or manufacturing the various parts forming the linkage mechanism 15 to be made up for) provided at the interconnection points between the bars 20, 21, 22 and 23 and the rigid members 24, 25. According to the present invention, the centres of said ball-and-socket joints are aligned along the steering axes Z1 and Z2, and the rolling axes J, K and L, M lie on the equatorial planes of the respective wheels, which are parallel to the median plane PM of the vehicle. The two front wheels have in this way a forward stroke that has well-known stabilizing effects on the vehicle, since it generates a pull-in or biasing force that increases with the steering extent.

Of the steering assembly, which is a part of the vehicle that is not directly concerned by the present invention, the accompanying drawing solely illustrates in Figure 2 the tie-rods 91, 92 that connect the rigid members 24, 25 supporting the spindles 26, 27 to a brace 93 actuated by the head 11 of the steering gear via mechanical transmissions (not shown).

According to another feature of the present invention, a lattice-like structure, which is generally indicated at 14, ensures the interconnection between the chassis and the linkage mechanism 15, further to the support of the pin of the above mentioned brace 93 used as a connection means between the tie-rods 91 and 92 of the steering assembly.

As clearly shown in Figure 3, the lattice-like structure 14 extends on the median plane PM of the vehicle and consists substantially of a front riser 41 and a rear riser 42, to which there are butt-welded, one upon the other, a first and a second longitudinal beam 43 and 44; to the rear riser 42 there is further welded a backward protruding bracket 45.

On top of the rear riser 42 there is attached a first pin 46 provided to allow for coupling, according to an axis H1, with the bushes 13 that are provided integral with the descending tube 9 of the chassis. To the free end portion of the bracket 45 there is attached a second pin 47 provided to allow for coupling, according to an axis H2, with a pair of bushes (of which only the left-hand one is shown in Figure 1 as indicated at 18) that are provided at the front end portion of the lower longitudinal tubes 1 of the chassis. The axes H1, H2 of the pins 46, 47 are therefore perpendicular to the median plane PM of the vehicle and the equatorial planes of the two front wheels.

As illustrated in Figure 3, the risers 41, 42 of the lattice-like structure 14 support:
- below the lower beam 44, the central fulcrum pins 52, 53 (aligned along the axis X) of the upper bars 20, 21 of the linkage mechanism 15;
- at the lower end portion thereof, the central fulcrum pin 54 (according to the axis Y) of the lower bars 22, 23 of the linkage mechanism 15.

As already pointed out earlier in this description, the linkage mechanism 15 used to interconnect the two front wheels is provided with a suspension system 19 that comprises a pair of shock-absorbing struts 60A, 60B and two rocking levers 61A, 61B that are hinged with their central fulcra on to the lattice-like structure 14 by means of pins 50, 51 attached below the upper beam 43 - see Figure 3. The pins 50, 51 are aligned along the same inclined axis A that is parallel to the axes X, Y and lies itself on the median plane PM of the vehicle. The distance between the axes A and X, indicated at C in Figure 3, is in this way a fixed one.

The shock-absorbing struts 60A, 60B are suspended on top to the opposite end portions of the rocking levers 61A, 61B by means of respective first gudgeon pins 62A and 62B and, in a first embodiment (as illustrated in Figures 4 to 6), they are connected at the bottom, by means of second gudgeon pins 63A and 63B, to the upper bars 20 and 21 of the linkage mechanism 15. The axes RA, RB and SA, SB of said gudgeon pins are therefore parallel to each other, as well as parallel to the axes A, X, Y.

Thanks to the above described and explained contrivances, for a vehicle according to the present invention the design engineer has the possibility of favouring rather than limiting the rolling speed of the wheels in view of enabling the same vehicle to be driven in a more sporting, ie. racing-like than a touring or usual travelling manner in the presence of a protective covering, in an extremely simple manner. To do this, no need actually arises for variants to be introduced in either the linkage mechanism 15 or the lattice-like structure 14. To this end, it is in fact sufficient for solely more or less long shock-absorbing struts to be selected in the suspension system 19 in view of obtaining a controlled behaviour in the various trims that the vehicle is likely to take. As already pointed out, the distance C between the fulcrum axes A of the rocking levers of the suspension system 19 and the axis X of the upper bars 20 and 21 of the linkage mechanism 15, as well as the distance between said axis X and the parallel and co-planar fulcrum axis Y of the lower bars 22, 23 of the same linkage mechanism 15, remain rigorously fixed thanks to the utilization of the lattice-like structure 14.

In view of better illustrating the way in which all this works, for reasons of greater simplicity only the linkage mechanism 15 interconnecting the front wheels is shown in the accompanying drawing, along with the related suspension system 19, for three significant trims of the vehicle.

The assumption is that the design engineer has to design a vehicle that is intended to be used at least prevailingly for racing or similar purposes. In this case, shock-absorbing struts 60A, 60B are selected which, in the static trim of the vehicle (ie. vehicle resting on the ground under no load conditions - see Figure 4), have a length which is equal to the fixed distance C between the axes A and X, which means that, if the distances between the axes RA, SA of the gudgeon pins 62A, 63A and the axes RB, SB of the gudgeon pins 62B, 63B are referred to as A0 and B0, respectively, the relation A0 = B0 = C applies.

In the above cited static trim of the vehicle, the shock-absorbing struts 60A, 60B are not loaded, so that:
- the median plane PM of the vehicle, as well as the equatorial planes of the front wheels, which are parallel to said median plane, are arranged vertically;
- the wheels themselves are provided with a forward stroke thanks to the already mentioned inclination of the steering axes Z1, Z2 with respect to the vertical;
- the axes of the spindles 26, 27 (and, therefore, the axes of rotation of the wheels) are horizontal.

Figure 5 refers to a first dynamic trim of the vehicle, and namely to a vehicle running along a rectilinear course. Owing to the static and dynamic load that weighs on the front wheels, the shock-absorbing struts 60A and 60B keep themselves vertical, however they undergo a shrinkage Δ1, ie. become shorter by an extent Δ1, ie with respect to the fixed distance C between the axes A and X, which in other words means that the relation A1 = (A0 - Δ1) = B1 = (B0 - Δ1) < C will now apply for the distances A1 between the axes RA, SA and B1 between the axes RB, SB of the gudgeon pins 62A, 63A and 62B, 63B, respectively. As result:
- the equatorial planes of the front wheels remain parallel to the median plane PM of the vehicle, while the inclination with respect to the vertical of the steering axes Z1, Z2 on said planes undergoes a slight either positive or negative variation under a corresponding slight variation of the forward stroke (due to the effect of the different lowering extent of both their suspension system 19 and the one of the rear wheel 4), which brings about a slight forward or rearward inclination of the vehicle, when seen from a side, with respect to the static trim thereof illustrated in Figure 4;
- the bars 20, 21, 22, 23 of the linkage mechanism 15 incline upwards by a certain angle α on the horizontal, as this is clearly shown by the disposition of the geometrical axes thereof (which are the straight lines, formed by the four planes defined by the axes J and X, K and Y, L and X, M and Y, respectively, intersecting the plane of Figures 4 to 6);
- the median plane PM of the vehicle keeps in a vertical arrangement and the axes of rotation of the front wheels remain horizontal;
- the rocking levers 61A, 61B remain horizontal.

Figure 6 refers to a second dynamic trim of the vehicle, ie. a trim that is typical of a sporting kind of driving, when the vehicle is running through a bend so that a rolling effect takes place, which practically means an angular displacement φ with respect to the vertical V of the median plane PM containing the axes A, X and Y. In order to assure the required safety of the vehicle, the need is still felt for both the wheel mounted on the spindle 26 running on the extrados of the bend and the wheel mounted on the spindle 27 running on the intrados of the bend to be maintained in contact with the ground. in this case, the shock-absorbing struts 60A and 60B turn out to be shorter than the distance C (Figure 3) and so determine a different deformation of the quadrilateral supporting the left-hand wheel and the one supporting the right-hand wheel. The distances between the axes RA, SA and RB, SB of the gudgeon pins 62A, 63A and 62B, 63B change to a value A2 = (A0 - Δ2) = B2 = (B0 - Δ2) < X owing to a rotation about the axis A of the rocking levers 61A, 61B towards the interior of the bend by a certain angle γ. The upward inclination of the bars 30, 31, 32, 33 of the linkage mechanism 15 is therefore greater than the rolling angle φ assuming a value β = φ + γ * τ, where τ is a geometrical ratio linking the arm of the vertical load on a wheel and the arm of the actual force acting on the shock-absorber strut.

As opposed to the afore mentioned prior-art vehicle, the shock-absorber struts 60A, 60B of the suspension system 19 according to the present invention work by forcing the linkage mechanism 15 to behave in a different manner as compared with the median plane PM, ie. between the intrados of the bend (corresponding to the right-hand side of the same Figure 6) and the extrados (corresponding to the left-hand side). The parallelogram having the intersections of the rolling axes J, K, X, Y with the plane of Figure 6 as its vertices closes in to a greater extent than the parallelogram having the intersections of the axes X, Y, L, M with the same plane as its vertices. The engineer designing the vehicle obtains in this way an increase in the rolling speed of the front wheels and, as a result, a better placement when bending (which is clearly advantageous when driving the vehicle as in racing), while increasing the safety at the same time.

Conversely, in the case of a vehicle provided with a protective covering (which has the effect of increasing the inertia thereof with respect to the bottom rolling axis) the design engineer has to solely select the shock-absorbing struts 60A, 60B of the suspension system 19 in such a manner as to obtain that, in the static trim of the vehicle, the relation A0 = B0 > C applies and, notwithstanding their becoming shorter, the distances between the axes of the gudgeon pins remain greater than, or at least equal to, the distance C between the axes A and X even in the dynamic trim of the vehicle shown in Figure 6. In this case, the parallelogram having the intersections of the axes J, K, X, Y with the plane of Figure 6 as its vertices (ie. in correspondence of the intrados of the bend) closes in to a lesser extent than the parallelogram having the intersections of the axes X, Y, L, M with the same plane as its vertices (ie. in correspondence of the extrados), so that a slowing down of the rolling speed is obtained, which in turn effectively opposes the natural lowering of the centre of gravity and does away with the risks connected with the above mentioned greater inertia.

This is why a vehicle according to the present invention proves easy and safe to drive in all the trims that it may take when running on the road, and regardless of the manner in which it is driven, ie. racing or normal travelling, also in the case it is equipped, although occasionally, with a protective covering or a roll-bar.

For reasons of greater simplicity, a second embodiment of the present invention (see Figure 7, which again refers to the same trim of the vehicle as the one shown in Figure 5) is described here solely as far as the differences with respect to the first afore described embodiment are concerned, whereas the same reference numerals as in the afore given description are used to indicate the parts that remain conceptually unaltered.

The linkage mechanism 15bis differs from the afore described one in that, for each one of the two front steering and rolling wheels, spindle-carrying members and spindles are made integral with each other, so as to form a single piece indicated at 28, 29, respectively, in view of doing away with the need for the respective interfacing bearings to be used.

In the suspension system 19bis of the linkage mechanism 15bis, the rocking levers 61C, 61D supporting the shock-absorbing struts 60C, 60D are in the shape of an overturned U and use the same central fulcra 57, 58 of the upper bars 20, 21, so that the axis A coincides with the axis X and, from a construction point of view, a simplification of the lattice-like structure 14 is obtained. The first (upper) gudgeon pins 62C and 62D of the shock-absorbing struts 60C, 60D are located at the free end portions of the levers 61C, 61D, whereas the second (lower) gudgeon pins 63C and 63D are attached to the lower, bars 22 and 23,the central fulcrum axis of which remains the axis Y.

The way in which this embodiment works is still the same as the one described in connection with the first embodiment, which practically means that, in the various trims of the vehicle, the distance C between the central fulcrum axes X (or A) and Y remains rigorously fixed, whereas, in accordance with the options that the design engineer will from time to time select to use, the lengths of the shock-absorbing struts, ie. the distances between the axes RC, SC of the gudgeon pins 62C and 63C and the axes RD, SD of the gudgeon pins 62D and 63D, vary accordingly.

The functional advantages offered by this vehicle over the prior-art considered in this connection can be clearly appreciated from the above description, along with the far greater simplicity of the construction thereof.

It will be further appreciated that a number of different variants and embodiments of the present invention may be developed without departing from the scope of the present invention as defined by the appended claims. These may for instance include a vehicle with two rear driving wheels, which are obviously neither rolling nor steering, as well as a four-wheel vehicle with the rear wheels that are not steering, but rolling.

## Claims

1. Vehicle having a rigid chassis (1, 2), at least a rear driving wheel (4) and two front steering wheels (17) connected to each other by a linkage mechanism (15; 15bis) that comprises a first pair (20, 21) and a second pair (22, 23) of rigid overlying cross bars which have their fulcra centrally on pins (52, 53, 54) having their axes (X, Y) parallel to each other and lying on the median plane (PM) and which are connected to rigid wheel-supporting means (24, 25; 28, 29) by means of ball-and-socket joint members (30, 31, 32, 33) with their axes (J, K, L, M) parallel to the median plane (PM), said linkage mechanism being further provided with a suspension system (19; 19bis) that comprises at least a pair of shock-absorbing struts (60A, 60B; 60C, 60D) whose upper end portions (62A, 62B; 62C, 62D) are on the opposite end portions of rocking levers (61A, 61B; 61C, 61D) having their fulcrum on an interconnecting structure (14) between the linkage mechanism and the chassis, and whose lower end portions (63A, 63B; 63C, 63D) are connected to one of said pairs of cross bars, **characterized in that** said interconnecting structure is a lattice-work (14) extending on the median plane (PM) so that the axis (A) of the pins (50, 51; 57, 58) of the rocking levers (61A, 61B; 61C, 61D) is caused to lie on the same median plane and parallel to the axes (X, Y) of the fulcrum pins (52, 53, 54) of the cross bars (20, 21, 22, 23) of the linkage mechanism (15; 15bis), in such a manner that, in the various trim of the vehicle, the distances between the axes (RA-SA, RB.-SB; RC-SC, RD-SD) of the opposite end portions of the shock-absorbing struts (60A, 60B; 60C, 60D) are variable regardless of the fixed distance between the axes (X, Y) of the fulcrum pins (52, 53, 54) of the cross bars (20, 21, 22, 23).

2. Vehicle according to claim 1, **characterized in that** the rocking levers (61A, 61B; 61C, 61D) are adapted to rotate about their own fulcrum axis (A) so that, for a given rolling angle (φ) of the front wheels, the cross bars (20, 21, 22, 23) of the linkage mechanism (15; 15bis) undergo an inclination (β) which is greater than the rolling angle and is correlated with the angle of rotation (γ) of the rocking levers (61A, 61B; 61C, 61D).

3. Vehicle according to claim 1 or 2, **characterized in that** the ball-and-socket joint members (30, 31, 32, 33) that are a part of the linkage mechanism (15) have their centres aligned along the steering axes (Z1, Z2) of the front wheels, and that the axes (J, K, L, M) of the same ball-and-socket joint members (30, 31, 32, 33) lie on the equatorial planes of the corresponding wheels that are parallel to said median plane (PM).

4. Vehicle according to claim 3, **characterized in that** said steering axes (Z1, Z2) are inclined with respect to the vertical so as to confer a forward stroke to the front wheels.

## Patentansprüche

1. Fahrzeug mit einem starren Chassis (1, 2), wenigstens einem hinteren Antriebsrad (4) und zwei vorderen Lenkrädern (17), die durch einen Kopplungsmechanismus (15; 15b) miteinander verbunden sind, der ein erstes Paar (20, 21 ) und ein zweites Paar (22, 23) starrer übereinanderliegender Querstangen umfasst, deren Drehpunkte mittig an Bolzen (52, 53, 54) liegen, deren Achsen (X, Y) parallel zueinander sind und auf der Mittelebene (M) liegen, und die über Kugelgelenkelemente (30, 31, 32, 33), deren Achsen (J, K, L, M) parallel zu der Mittelebene (PM) sind, mit starren Radtrageeinrichtungen (24, 25; 28, 29) verbunden sind, wobei der Kopplungsmechanismus des Weiteren mit einem Aufhängungssystem (19; 19b) versehen ist, das wenigstens ein Paar stoßdämpfender Streben (60a, 60b; 60c, 60d) umfasst, deren obere Endabschnitte (62a, 62b; 62c, 62d) sich an den einander gegenüberliegenden Endabschnitten von Schwingarmen (61a, 61b; 61c, 61d) befinden, deren Drehpunkt an einer Verbindungsstruktur (14) zwischen dem Kopplungsmechanismus und dem Chassis liegt, und deren untere Endabschnitte (63a, 63b; 63c, 63d) mit einem der Paare von Querstangen verbunden sind,
**dadurch gekennzeichnet, dass**
die Verbindungsstruktur ein Gitterwerk (14) ist, das sich auf der Mittelebene (PM) so erstreckt, dass die Achse (A) der Bolzen (50, 51; 57, 58) der Schwingarme (61 A, 61B; 61C, 61D) **dadurch** so auf der gleichen Mittelebene und parallel zu den Achsen (X, Y) der Drehbolzen (52, 53, 54) der Querstangen (20, 21, 23) des Kopplungsmechanismus (15; 15b) liegt, dass bei verschiedenen Längsneigungen des Fahrzeugs die Abstände zwischen den Achsen (RA-SA, RB-SB; RC-SC, RD-SD) der einander gegenüberliegenden Endabschnitte der stoßdämpfenden Streben (60A, 60B; 60C, 60D) unabhängig von dem unveränderlichen Abstand zwischen den Achsen (X, Y) der Drehbolzen (52, 53, 54) der Querstangen (20, 21, 22, 23) veränderlich sind.

2. Fahrzeug nach Anspruch 1, **dadurch gekennzeichnet, dass**
die Schwingarme (61A, 61B; 61C, 61D) so eingerichtet sind, dass sie sich um ihre eigene Drehachse (A) herum drehen, so dass bei einem bestimmten Wankwinkel (4) der Vorderräder die Querstangen (20, 21, 22, 23) des Verbindungsmechanismus (15; 15B) eine Neigung (β) erhalten, die größer ist als der Wankwinkel und in Wechselbeziehung zu dem Drehwinkel (γ) der Schwingarme (61A, 61B; 61C, 61D) steht.

3. Fahrzeug nach Anspruch 1 oder 2, **dadurch gekennzeichnet, dass**
die Mittelpunkte der Kugelgelenkelemente (30, 31, 32, 33), die ein Teil des Kopplungsmechanismus (15) sind, entlang der Lenkachsen (Z1, Z2) der Vorderräder ausgerichtet sind und dass die Achsen (J, K, L, M) dieser Kugelgelenkelemente (30, 31, 32, 33) auf den Äquatorialebenen der entsprechenden Räder liegen, die parallel zu der Mittelebene (PM) sind.

4. Fahrzeug nach Anspruch 3, **dadurch gekennzeichnet, dass**
die Lenkachsen (Z1, Z2) in Bezug zur Vertikalen geneigt sind, um den Vorderrädern einen Vorwärtshub zu verleihen.

## Revendications

1. Véhicule ayant un châssis rigide **(1, 2)**, au moins une roue motrice arrière **(4)** et deux roues directrices avant **(17)** reliées entre elles par un mécanisme de liaison **(15 ; 15bis)** qui comprend une première paire **(20, 21)** et une deuxième paire **(22, 23)** de barres transversales rigides superposées qui ont leurs points d'appui en position centrale sur des broches **(52, 53, 54)** ayant leurs axes **(X, Y)** parallèles entre eux et situés dans le plan médian **(PM)** et qui sont reliées à des moyens supports de roues rigides **(24, 25 ; 28, 29)** au moyen d'éléments de jonction à rotule **(30, 31, 32, 33)** avec leurs axes **(J, K, L, M)** parallèles au plan médian **(PM)**, ledit mécanisme de liaison étant muni de plus d'un système de suspension **(19 ; 19bis)** qui comprend au moins une paire de jambes absorbeuses de choc **(60A, 60B, 60C, 60D)** dont les parties d'extrémité supérieures **(62A, 62B, 62C, 62D)** sont sur les parties d'extrémité opposées de leviers basculants **(61A, 61B, 61C, 61D)** ayant leur point d'appui sur une structure de jonction **(14)** entre le mécanisme de liaison et le châssis, et dont les parties d'extrémité inférieures **(63A, 63B, 63C, 63D)** sont reliées à l'une desdites paires de barres transversales, **caractérisé en ce que** ladite structure de jonction est un réseau **(14)** s'étendant sur le plan médian **(PM)** de sorte que l'axe **(A)** des broches **(50, 51 ; 57, 58)** des leviers basculants **(61A, 61B, 61C, 61D)** est forcé à se placer sur le même plan médian et parallèlement aux axes **(X, Y)** des broches d'appui **(52, 53, 54)** des barres transversales **(20, 21, 22, 23)** du mécanisme de liaison **(15 ; 15bis)**, de telle manière que, dans les différentes positions du véhicule, les distances entre les axes **(RA-SA, RB-** **SB ;RC-SC, RD-SD)** des parties d'extrémité opposées des jambes absorbeuses de chocs **(60A, 60B, 60C, 60D)** sont variables indépendamment de la distance fixe entre les axes **(X, Y)** des broches d'appui **(52,53,54)** des barres transversales **(20, 21, 22, 23)**.

2. Véhicule selon la revendication 1, **caractérisé en ce que** les leviers basculants **(61A, 61B, 61C, 61D)** sont adaptés pour tourner autour de leur axe d'appui **(A)** de sorte que, pour un angle de roulis (Φ) donné des roues avant, les barres transversales **(20, 21, 22, 23)** du mécanisme de liaison **(15 ; 15bis)** subissent une inclinaison (β) qui est plus grande que l'angle de roulis et est corrélé à l'angle de rotation (γ) des leviers basculants **(61A, 61B, 61C, 61D)**.

3. Véhicule selon la revendication 1 ou 2, **caractérisé en ce que** les éléments de jonction à rotule **(30, 31, 32, 33)** qui font partie du mécanisme de liaison **(15)** ont leurs centres alignés le long des axes de direction **(Z1, Z2)** des roues avant, et **en ce que** les axes **(J, K, L, M)** de ces mêmes éléments de jonction à rotule **(30, 31, 32, 33)** se trouvent sur les plans équatoriaux des roues correspondantes qui sont parallèles audit plan médian **(PM)**.

4. Véhicule selon la revendication 3, **caractérisé en ce que** lesdits axes de rotation **(Z1, Z2)** sont inclinés par rapport à la verticale afin de conférer une plongée vers l'avant aux roues avant.
